# EUROPEAN PATENT APPLICATION

(11) **EP 0 907 236 A2**
(43) Date of publication of application: **07.04.1999**
(21) Application number: 98402347.3
(22) Date of filing: 24.09.1998
(51) Int. Cl.: H02M 1/12, H02M 3/00

(54) **Switched series regulator**

(30) Priority: 02.10.1997 ES 9702060
(71) Applicant: ALCATEL, 75008 Paris (FR)
(72) Inventor: Fontan Tarodo, Antonio, 28224 Pozuelo de Alarcon, Madrid (ES); De la Cruz Moreno, Enrique, 28002 Madrid (ES); Sebastian Zuniga, Javier, 33202 Gijon (ES); Villegas Saiz, Pedro José, 33210 Gijon (ES); Hernando Alvarez, Marta Maria, 33204 Gijon (ES)
(74) Representative: Feray, Valérie

(57) **Abstract**

Switched series regulator comprising power factor correcting means (3) with a first set of terminals (4, 5) which are connected to a second set of terminals (7, 8), as input terminals of converter means (9), where one terminal (10) of a third set of terminals (10, 11), as output terminals of the converter means (9), is connected to the terminal (4), and the other terminal (11) is connected to one end (12) of a load of the series regulator. The other end (13) of the load is connected to the terminal (8), in such a way that a third voltage (V3) that appears across said ends (12, 13) is the sum of a first voltage (V1) that appears across the first set of terminals (4, 5) and a second voltage (V2) that appears across said third set of terminals (10, 11).

## Description

### OBJECT OF THE INVENTION

The present invention refers to a switched power converter which has a high input power factor and an output voltage regulated both statically and dynamically. The switched power converter is connected to an alternating current distribution network and transforms this alternating current into a direct current which is applied to a load, where said load may comprise a battery, for example.

### STATE OF THE ART

A power converter with a high power factor and regulated output voltage is known, for example, from the article "IMPROVING DYNAMIC RESPONSE OF POWER FACTOR PREREGULATORS BY USING TWO-INPUT HIGH EFFICIENT POST-REGULATORS", by J. Sebastian, P. Villegas, F. Nuno, O. Garcia and J. Araug, Proceedings of the Power Electronics Specialists Conference 1996 (PESC96), June 23 to 27, 1996, Baveno, Italy, pages 1818 to 1824; which is included in this patent application by reference

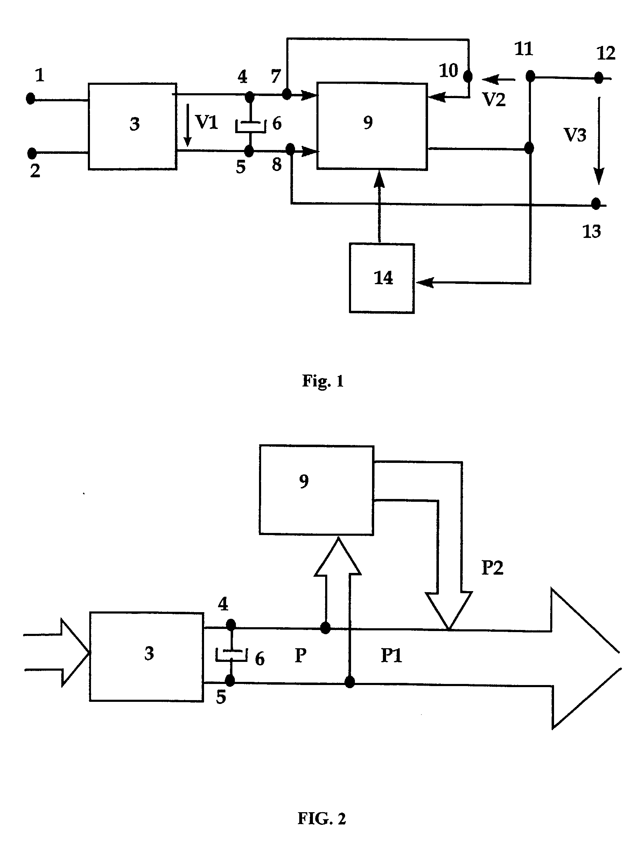

Figure 1.a of said article, page 1819, shows in a block diagram the high factor power converter comprising a first stage formed by two-output power factor correcting means, having a voltage present on each one of said outputs, respectively. The values of these voltages are different but very close, such that the value of the output voltage of the converter lies between these two voltages.

Across the terminals that constitute each of the outputs of the first stage, a capacitor is connected, respectively, to reduce the low frequency ripple on the voltage of each output. These capacitors are bulky and consequently occupy a considerable space in comparison with the rest of the power converter circuitry.

The two outputs of the correcting means are connected to a second stage which comprises post-regulating means, the outputs of which are connected to the ends of a load. Consequently, the two stages are connected in cascade.

The second stage, the post-regulating means, performs the regulation of the output voltage of the power converter.

It has, however, a serious drawback as a result of the existence of two outputs from the first stage, making the circuitry of the first stage more complicated; for example, it implies that the transformer incorporated in the correcting means has at least two secondary windings.

In addition, since there are two outputs which have to be regulated in a precise manner, the control module for this stage requires more circuitry given the duplication of the control function, thus making it necessary to produce a design for each application. Consequently the overall cost of the power converter with a high power factor is penalised.

### CHARACTERISATION OF THE INVENTION

The switched series regulator of the present invention has a power factor close to unity and a high efficiency; it comprises power factor correcting means the input of which is connected to an alternating current distribution network and has a single output consisting of a first set of output terminals across which a capacitor is connected to reduce the low frequency ripple on a first voltage which appears on one terminal of the first set of output terminals with respect to the other terminal of the first set of output terminals.

It also comprises converter means with a second set of input terminals, being connected to the aforementioned first set of output terminals. The output from said converter means is formed by a third set of output terminals, one terminal of the third set of output terminals being connected to one terminal of the second set of input terminals of the converter means. The other terminal of said third set of output terminals is connected to one end of a load of the switched series regulator. The other end of said load is connected to the other terminal of the second set of input terminals of the converter means.

A second voltage appears on one terminal with respect to the other terminal of the third set of output terminals, such that the sum of the first voltage and the second voltage equals a third voltage which appears on one end with respect to the other end of the load.

As a result, the switched series regulator offers a dynamic output regulation which is sufficiently fast so as to prevent the low frequency ripple present on the capacitor from being reflected on the load, permitting thereby a greater ripple on this capacitor and, consequently, lower size and cost.

Since the second voltage is considerably less than the first voltage, the converter means are implemented with components of less voltage, which have lower losses and, therefore, the converter means have a high efficiency and, in addition, the switched series regulator offers a high overall efficiency since a major portion of the power is supplied directly to the load from the power factor correcting means.

The switched series regulator of the invention is of lower overall cost because it is possible to employ commercially available single-output power factor correcting modules and components of less voltage in the converter means.

### BRIEF DESCRIPTION OF THE FIGURES

A more detailed explanation of the invention is provided in the following description, based on the figures attached, in which:
- figure 1 shows a block diagram of a switched series regulator according to the invention,
- figure 2 shows, in an equivalent diagram, the power flow of the switched series regulator according to the invention,
- figure 3 shows, on voltage versus time axes, the relation between a first voltage, a second voltage and a third voltage according to the invention,
- figure 4 shows an electrical schematic of a preferred implementation of converter means according to the invention, and
- figures 5a - 5b show the converter means of the switched series regulator of figure 4, operating as a forward converter, according to the invention.

### DESCRIPTION OF THE INVENTION

Figure 1 shows a block diagram of a switched series regulator comprising power factor correcting means 3, the input terminals 1, 2 of which are connected to an alternating current distribution network. The correcting means 3 delivers its output power P via a first set of output terminals 4, 5.

A first voltage V1 appears on terminal 4 with respect to terminal 5 of the first set of output terminals. Between said terminals 4, 5 there is also connected a capacitor 6 in order to reduce the low frequency ripple present on said first voltage V1.

The first set of terminals 4, 5 of the correcting means is connected to a second set of input terminals 7, 8 of converter means 9. The output of said converter means 9 consists of a third set of output terminals 10, 11, one terminal 10 of said third set of output terminals 10, 11 being connected, for example, to terminal 7 of the second set of input terminals 7, 8.

The other terminal 11 of said third set of output terminals 10, 11 is connected to one end 12 of a load of the switched series regulator. This load can include a battery, for example. The other end 13 of the load is connected to the other terminal 8 of the second set of input terminals 7, 8, for example; whereby the terminals 5, 8 and 13 are connected to a common voltage reference of the switched series regulator.

A third voltage V3 appears on the end 12 with respect to end 13 of the load, said third voltage V3 being supplied by the switched series regulator to its load.

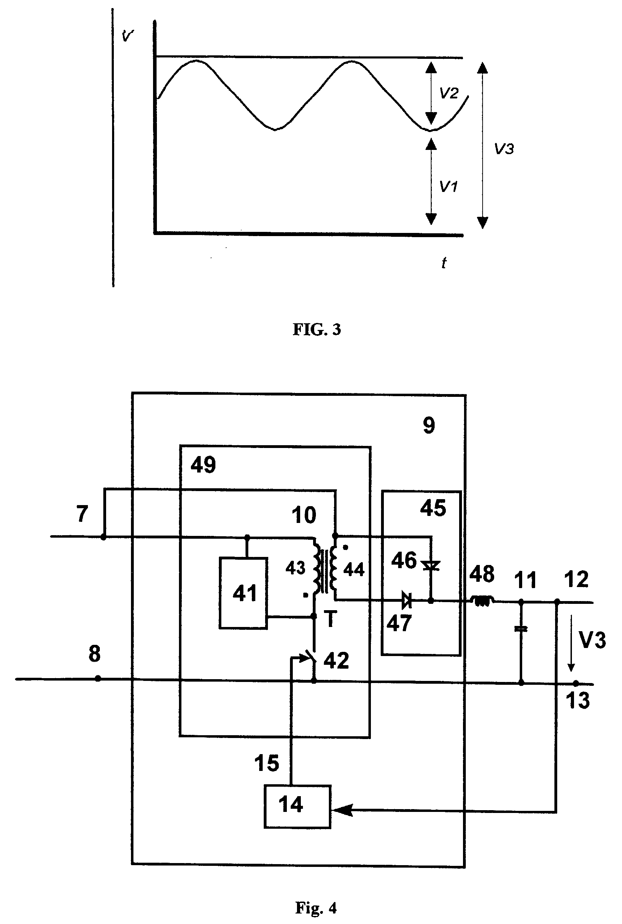

As is shown in figure 3, the third voltage V3 is the sum of the first voltage V1 and a second voltage V2 which appears on terminal 11 with respect to terminal 10. The first voltage V1 is several times greater than the second voltage V2, that is, the value of the first voltage V1 is close to that of the third voltage V3. Thus, the first voltage V1 has a greater ripple after filtering by the capacitor 6, this capacitor being of smaller size and lower cost. All of the foregoing contributes to making the series regulator more compact and less costly.

As is shown in figure 2, the correcting means 3 produce an output power P which is split into two parts; a first power flow P1 is applied directly to the load, while a second power flow P2 is processed in the converter means 9 and then applied to the load; the value of the first power level P1 being, for example, several times greater than that of the second power level P2. In other words, the switched series regulator provides an output voltage, the third voltage V3, higher than the output voltage, the first voltage V1, from the power factor correcting means 3 at all times. As a consequence, the series regulator offers sufficiently fast dynamic regulation of the third voltage V3.

The correcting means 3 can be implemented with any power factor correcting module which has a single output and whose output voltage is close to the voltage that the switched series regulator supplies to its load.

Furthermore, the converter means 9 can be implemented with various types of topology, for example forward converter, flyback converter, etc. The selection criteria for the correcting means 3 and the converter means 9 depend on each specific application.

Figure 4 shows a preferred implementation of the converter means 9; in this case a forward topology is employed, for example, incorporating a forward converter 49 connected to rectifier means 45. This topology has been used as an example in order to explain the operation of the switched series regulator, it being possible to implement said converter means 9 with other topologies to achieve similar results and similar advantages.

The forward converter 49 comprises demagnetising means 41 in order to demagnetise a transformer T. Said demagnetising means 41 are connected in parallel with a primary winding 43 of said transformer T, for example, although they may be connected in other ways to perform the same function. It also includes a switch 42 in series with the primary winding 43 of the transformer T. In parallel with this primary winding 43 are connected the demagnetising means 41 in order to discharge the energy stored in said primary winding during the time interval when the switch 42 is open.

A secondary winding 44 of the transformer T is connected to the rectifier means 45 in order to rectify an AC voltage which is applied across the ends of said secondary winding 44. An inductance 48, incorporated in an output filter, is connected between the terminal 11 of the third set of output terminals and the end 12 of the load, filtering the third voltage V3.

Besides, it comprises control means 14 to generate a control signal 15 for regulating the third voltage V3, for which purpose said third voltage V3 is sensed at end 12, for example. Said signal 15 controls the opening or closing of the switch 42 in the converter means 9.

The opening and closing of switch 42 determines the value of the second voltage V2 such that, when this switch 42 is closed, the value of said second voltage V2 is adjusted by the transformer T because the voltage V2 is equal to the voltage present between terminal 11 and terminal 10. When said switch 42 is open said second voltage V2 is adjusted by the inductance 48.

At all times, the third voltage V3 is the sum of the first voltage V1 and the second voltage V2. Given that the second voltage V2 takes a low value in all ON times of the switch 42, the converter means 9 are implemented with components of low voltage, the respective internal resistance of which is small, as well as being of lower cost, whereby the efficiency of said converter means is high and its cost is low.

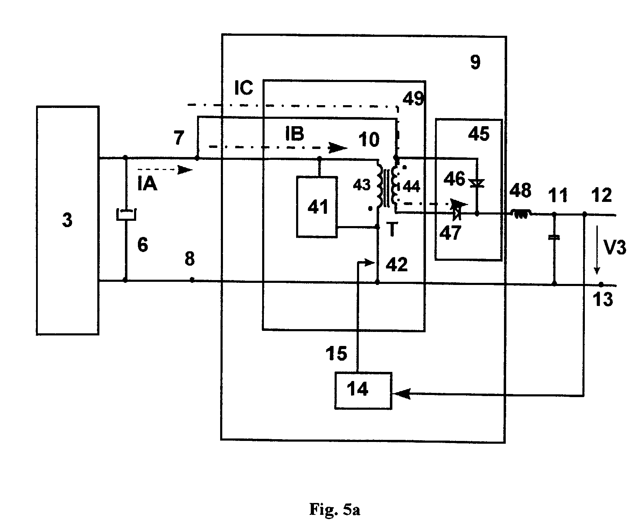

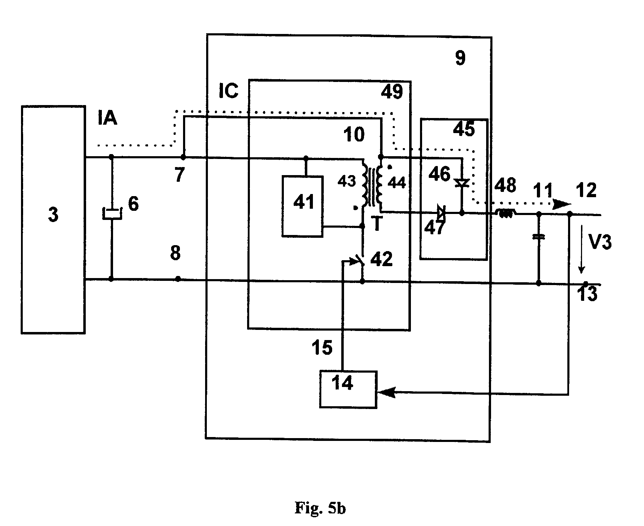

Figures 5a and 5b show the operation of the switched series regulator. Figure 5a shows the time interval in which the switch 42 is closed; in this time interval power is transferred directly from the primary winding 43 to the secondary winding 44. A current IC which flows through the load is equal to a current IB which flows in the primary winding 43 multiplied by a factor N, the turns ratio of the transformer T. Said current IC flows through a rectifier element 47 of the rectifier means 45, said rectifier element 47 forming the actual rectifier branch.

Figure 5b shows the time interval in which the switch 42 is open. During this time interval the primary winding 43 of the transformer T is demagnetised by means of the demagnetiser means 41. In this case, the load current IC is equal to a current IA supplied by the correcting means 3. The current IC flows through a rectifier element 46 of the rectifier means 45, said rectifier element 46 constituting the freewheel branch.

As a result, the operating mode of the series regulator is very straightforward, and so are its design and control. The switched series regulator offers high level of integration, low cost and reduced size.

In addition, the switched series regulator provides high-speed output voltage regulation, high overall efficiency, high power factor and good dynamic response.

The overall efficiency of the series regulator is very high, because the output power P of the correcting means 3 is split, and the greater part of the power, first power P1, is fed directly to the load, without being processed by the converter means 9. The remainder of the power, second power P2, is processed for a second time in the converter means 3, which are implemented using a high efficiency topology.

## Claims

1. **Switched series regulator,** comprising power factor correcting means (3) the input terminals (1, 2) of which are connected to an alternating current distribution network, a first set of output terminals (4, 5) of said power factor correcting means (3) being connected to a second set of input terminals (7, 8) of converter means (9), **characterised** in that one terminal (10) of a third set of output terminals (10, 11) of said converter means (9) is connected to a terminal (4) of said first set of output terminals (4, 5), and the other terminal (11) of the third set of output terminals (10, 11) is connected to one end (12) of a load of the series regulator and the other end (13) of said load is connected to one terminal (8) of the second set of input terminal (7, 8), in such a manner that a third voltage (V3) which appears across said ends (12, 13) of said load is the sum of a first voltage (V1) which appears across said first set of output terminals (4, 5) and a second voltage (V2) which appears across said third set of output terminals (10, 11).

2. **Switched series regulator** according to claim 1, **characterised** in that said converter means (9) include a forward converter (49) which is connected to a rectifier module (45).

3. **Switched series regulator** according to claim 2, **characterised** in that said forward converter (49) includes a transformer (T) with at least one primary winding (43) and at least one secondary winding (44), said primary winding (43) being connected in series with a switch (42), and demagnetiser means (41) connected in parallel with said primary winding (43) in order to demagnetise it during the time interval in which the switch (42) is open.

4. **Switched series regulator** according to claim 3, **characterised** in that the converter means (9) also comprise control means (14) to sense the aforementioned third voltage (V3), producing a control signal (15) to control the opening and closing of said switch (42), thereby regulating said third voltage (V3).
